# FASCICULE DE BREVET EUROPEEN

(11) **EP 3 434 136 B1**
(45) Date de publication et mention de la délivrance du brevet: **29.04.2020**
(21) Numéro de dépôt: 17182744.7
(22) Date de dépôt: 24.07.2017
(51) Int. Cl.: A44C 5/16, G04B 37/14, F16B 2/22, F16B 7/04, F16B 19/08, F16B 21/18, F16B 19/10

(54) **BRACELET DE MONTRE RIVETÉ**
GENIETETES ARMBAND EINER ARMBANDUHR
RIVETED WATCH STRAP

(43) Date de publication de la demande: 30.01.2019
(73) Titulaire: The Swatch Group Research and Development Ltd, 2074 Marin (CH)
(72) Inventeur: Vuille, Pierry, 2338 Les Emibois (CH); Nicolas, Cédric, 2000 Neuchâtel (CH); Ferri, Yvan, 1004 Lausanne (CH)
(74) Mandataire: ICB SA

(56) Documents cités:
- FR-A- 1 528 737
- FR-A1- 2 637 469
- US-A- 1 293 944
- US-A- 2 439 274

## Description

### Domaine de l'invention

L'invention concerne un bracelet de montre ou de bijou comportant au moins un brin lequel comporte un demi-brin inférieur connexe au niveau d'un pli à un demi-brin supérieur, agencés pour entourer une barrette ou une anse de montre ou de bijou au niveau dudit pli et comportant chacun, en symétrie par rapport audit pli, au moins un perçage agencé pour le passage d'un rivet double, que comporte ledit bracelet, et qui comporte un corps inférieur à tête et un corps supérieur à tête agencés pour être, ou bien insérés l'un dans l'autre coaxialement, ou bien chacun inséré dans un tube commun déformable et coaxialement audit tube commun, avec leurs têtes respectives de part et d'autre dudit brin replié sur lui-même.

L'invention concerne encore une montre comportant un tel bracelet.

L'invention concerne encore un bijou comportant un tel bracelet.

L'invention concerne le domaine des bracelets pour montres ou bijoux.

### Arrière-plan de l'invention

Les bracelets fixés avec des rivets sont appréciés en horlogerie ou bijouterie pour une personnalisation à caractère sportif des montres et bijoux, car les rivets constituent un rappel d'applications liées aux grands événements de l'aviation, de la course automobile, ou encore de la haute navigation.

Ces rivets sont des composants de plus en plus soignés, qui peuvent être élaborés en matériaux peu courants comme des alliages de titane, ou en matériaux précieux, notamment titrés, et les têtes de rivets comportent des éléments de décor conçus pour valoriser le bracelet. Les rivets comportant un alésage central sont tout particulièrement appréciés.

Ces bracelets rivetés sont utilisés classiquement sur les montres ou bijoux qui comportent des cornes ou anses fixes, qu'il est nécessaire de contourner pour mettre en place les brins de bracelet concernés. La fixation des rivets est en général irréversible, du fait d'une pose avec un fort chassage, un bouterollage, voire un collage ou une soudure, qui rendent le démontage des rivets presque impossible. Certains rivets sont d'ailleurs purement décoratifs, et ne sont pas conçus pour être démontés. L'échange de bracelet nécessite alors la destruction des rivets, en général par perçage, ce qui n'est pas souhaitable dans tous les cas où les rivets ont une forte valeur intrinsèque. Les rivets vissés qui existent, notamment en maroquinerie, ne garantissent pas une fixation inaltérable, et peuvent se dévisser lors des mouvements de l'utilisateur et de ses vêtements, avec le risque de la perte de la montre ou du bijou.

Le document US2439274A au nom de SPECTOR décrit un bracelet de montre riveté, comportant des superpositions de matériau souple dans chaque brin, les rivets maintenant ensemble trois ou deux couches de matériau, selon qu'un brin de matériau souple passe ou non sous la boîte de montre, qui est maintenue par des boucles passées dans ses cornes et rivetées avec les brins de bracelet.

Le document FR1528737A au nom de CUIRS MEILLON décrit un bracelet de montre à cloutage apparent, en matériau souple, comportant au moins une patte de fixation souple maintenant aussi la boîte de montre. L'assemblage des différentes épaisseurs de matériau est fait avec des attaches parisiennes, qui comportent chacune une tête protubérante du côté visible de l'assemblage, dont partent deux lames plates rabattues sous l'assemblage, qui sont ou bien noyées dans des fentes ménagées sous la couche inférieure non visible de matériau souple, ou bien recouvertes par des pastilles adhésives pour prévenir toute blessure de l'utilisateur.

Il s'agit donc de mettre au point un bracelet riveté, notamment à rivets percés au centre, que l'utilisateur ne puisse démonter inopinément, qui soit démontable en atelier, en permettant la récupération et le réemploi des éléments de rivets, et garantissant l'interchangeabilité du bracelet.

### Résumé de l'invention

L'invention se propose de mettre au point un bracelet riveté palliant les inconvénients de l'art antérieur.

A cet effet, l'invention concerne un bracelet selon la revendication 1.

L'invention concerne encore une montre comportant un tel bracelet.

L'invention concerne encore un bijou comportant un tel bracelet.

### Description sommaire des dessins

D'autres caractéristiques et avantages de l'invention apparaîtront à la lecture de la description détaillée qui va suivre, en référence aux dessins annexés, où :
- la figure 1 représente, de façon schématisée, une montre comportant des cornes fermées et un bracelet selon l'invention ;
- la figure 2 représente, de façon schématisée, un bijou comportant des anses fermées et un bracelet selon l'invention ;
- les figures 3 à 6 illustrent une première variante de l'invention:

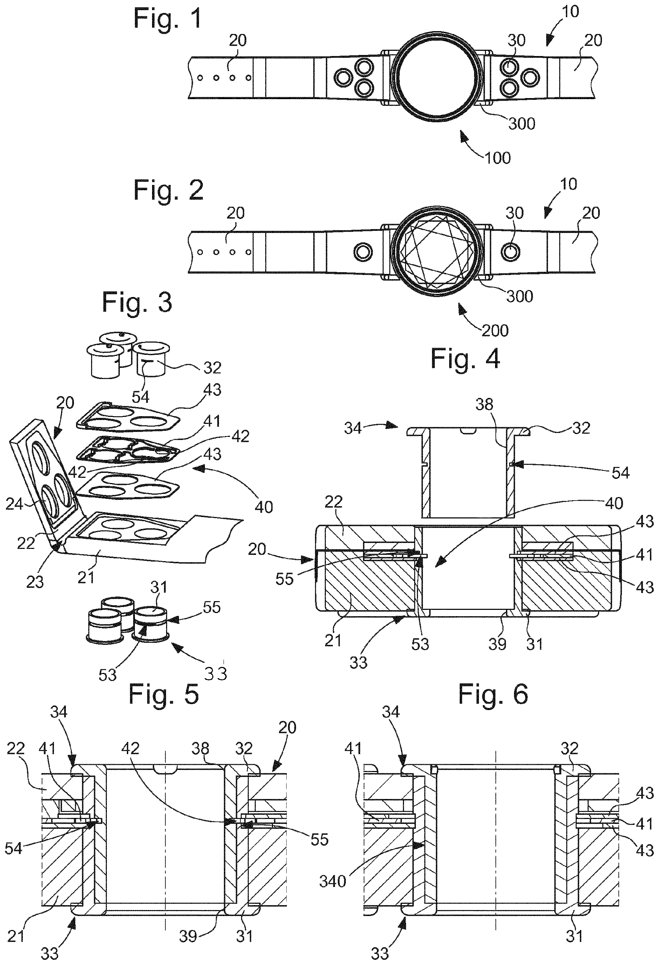

- la figure 3 représente, en perspective éclatée, deux demi-brins de bracelet, inférieur et supérieur, autour d'un pli médian, et comportant des perçages de passage de rivets, un corps inférieur qui constitue un corps extérieur est disposé pour son insertion sous le demi-brin inférieur, au-dessus duquel sont préparées deux plaques rigides de part et d'autre d'une plaque de maintien comportant des éléments élastiques, toutes destinées à être enfermées entre les deux demi-brins qui seront ensuite rabattus l'un sur l'autre, et un corps supérieur qui constitue un corps intérieur, et qui sera inséré dans le corps extérieur au travers du demi-brin supérieur pour assurer son maintien serré sur le demi-brin inférieur ;
- la figure 4 représente, en coupe passant par l'axe du rivet double qui sera constitué par l'assemblage de ces deux corps, les deux demi-brins déjà rabattus, la plaque de maintien immobilisant le corps extérieur au niveau d'une fente traversante de celui-ci, et le corps intérieur présenté pour son insertion;
- la figure 5 représente, de façon similaire à la figure 4, le même ensemble après insertion du corps intérieur, qui est alors arrêté axialement par la même plaque de maintien dans une gorge extérieur du corps intérieur ;
- la figure 6 représente, de façon similaire à la figure 5, le même ensemble après rotation d'un quart de tour du corps intérieur, qui repousse les lèvres de la plaque de maintien élastique, ce qui autorise sa dépose ;

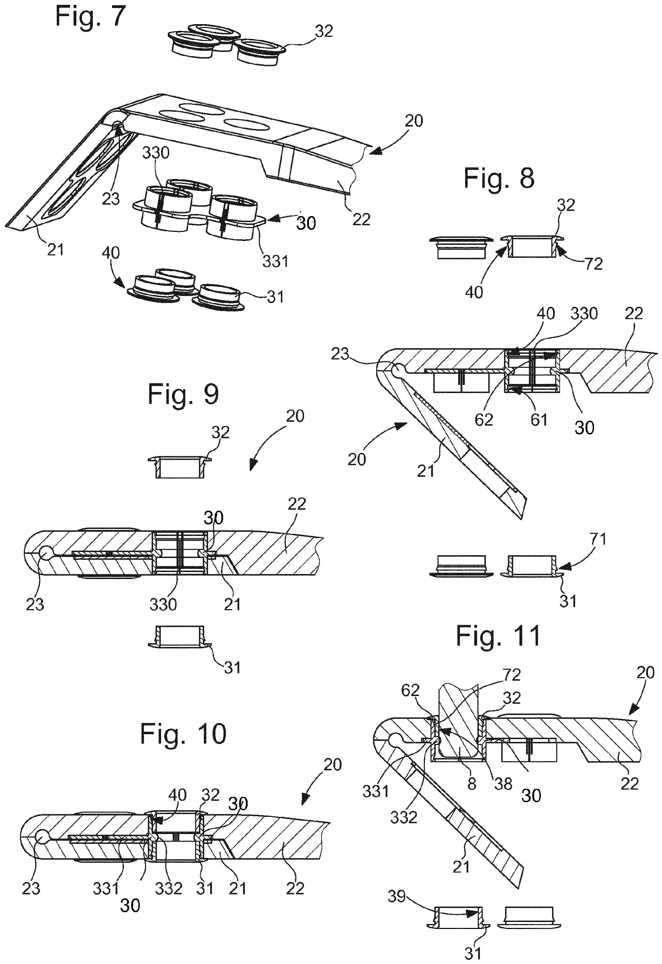

- les figures 7 à 11 illustrent une deuxième variante de l'invention :
- la figure 7 représente, en perspective éclatée, deux demi-brins de bracelet, inférieur et supérieur, autour d'un pli médian, et comportant des perçages de passage de rivets, dans une variante particulière non limitative avec trois rivets doubles, où trois corps inférieurs sont disposés pour leur insertion sous le demi-brin inférieur, et trois tubes communs sont prêts à être enfermés entre les deux demi-brins qui seront ensuite rabattus l'un sur l'autre, et trois corps supérieurs sont disposés pour leur insertion dans les tubes communs au travers du demi-brin supérieur pour assurer son maintien serré sur le demi-brin inférieur ;
- la figure 8 représente, en coupe passant par l'axe d'un tube commun, la disposition de ce dernier entre les deux demi-brins ;
- la figure 9 représente, de façon similaire à la figure 8, les deux demi-brins déjà rabattus enfermant le tube commun ;
- la figure 10 représente, de façon similaire à la figure 9, le corps inférieur et le corps supérieur clipés dans le tube commun ;
- la figure 11 représente, de façon similaire à la figure 10, l'insertion d'un outil venant repousser un bourrelet intérieur du tube commun pour procéder à l'expansion de celui-ci et libérer le corps inférieur.

### Description détaillée des modes de réalisation préférés

L'invention concerne un bracelet de montre ou de bijou 10, comportant au moins un brin 20, ou plus particulièrement deux brins 20.

Ce brin 20 comporte un demi-brin inférieur 21, qui est connexe au niveau d'un pli 23, à un demi-brin supérieur 22. Ces demi-brins 21 et 22 sont agencés pour entourer, ensemble, une barrette ou une anse 300 de montre 100 ou de bijou 200, au niveau du pli 23.

Les notions de positionnement inférieur ou supérieur sont en référence aux dessins, naturellement l'invention peut être mise en œuvre dans la configuration inverse.

Les demi-brins 21 et 22 comportent chacun, en symétrie par rapport au pli 23, au moins un perçage 24 agencé pour le passage d'un rivet double, que comporte le bracelet 10.

Ce rivet double comporte au moins un corps inférieur à tête 31 et un corps supérieur à tête 32, qui sont agencés pour être :
- ou bien dans une première variante illustrée aux figures 3 à 6, insérés l'un dans l'autre coaxialement ;
- ou bien dans une deuxième variante illustrée aux figures 7 à 11, chacun inséré dans un tube commun 30 déformable, et coaxialement entre eux et à ce tube commun 30.

Les têtes de rivets ne sont pas détaillées ici, on comprend qu'elles sont disposées dans une position adéquate, en fonction de l'épaisseur des demi-brins, pour immobiliser ceux-ci avec un léger serrage après fermeture du rivet double sur les deux demi-brins assemblés.

De façon usuelle, le corps inférieur 31 et le corps supérieur 32 comportent chacun une tête agencée pour immobiliser axialement le matériau du demi-brin de bracelet respectif, avec leurs têtes respectives de part et d'autre du brin 20 replié sur lui-même.

Selon l'invention, le bracelet 10 comporte, au niveau de chaque rivet double, un moyen de clipage 40, qui est agencé pour assurer un arrêt axial réversible du corps inférieur 31 par rapport au corps supérieur 32

Ce moyen de clipage 40 comporte :
- ou bien, dans la première variante des figures 3 à 6, au moins une plaque de maintien 41 élastique, notamment mais non limitativement fendue, agencée pour mettre en alignement une gorge inférieure 55 du corps inférieur 31 et une gorge supérieure 54 du corps supérieur 32 quand le corps inférieur 31 et le corps supérieur 32 sont insérés l'un dans l'autre ;
- ou bien, dans la deuxième variante des figures 7 à 11, au moins deux lèvres de clipage inférieure 61 et supérieure 62 ménagées dans le tube commun 30, et chacune agencée pour coopérer par clipage respectivement avec une lèvre complémentaire de clipage inférieure 71 du corps inférieur 31 et avec une lèvre complémentaire de clipage supérieure 72 du corps supérieur 32, quand le corps inférieur 31 et le corps supérieur 32 sont chacun inséré dans le tube commun 30.

Dans la première variante, un corps extérieur 33, qui est celui des corps inférieur 31 et corps supérieur 32 qui enserre l'autre lequel est un corps intérieur 34, comporte une fente traversante 53. Cette fente traversante 53 est perpendiculaire à son axe, et agencée pour servir de logement à la plaque de maintien 41 élastique.

Plus particulièrement, la gorge inférieure 55 est de révolution, tandis que la gorge supérieure 54 et la fente traversante 53 sont des fentes linéaires.

Comme on l'a vu plus haut, les notions de positionnement inférieur ou supérieur sont en référence aux dessins, naturellement l'invention peut être mise en œuvre dans la configuration inverse, et on comprend qu'indifféremment le corps inférieur 31 ou le corps supérieur 32 peut être un corps extérieur 33 ou un corps intérieur 34. Pour des questions d'esthétique on peut notamment choisir de placer le corps intérieur sur le demi-brin inférieur.

Cette plaque de maintien élastique 41 est déformable dans un plan perpendiculaire à l'axe du rivet double, et peut être agencée de diverses façons : comportant une lumière oblongue de part et d'autre de laquelle des lames sont déformables dans le plan, ou bien fendue de façon à définir au moins deux parties également déformables dans ce même plan, ou encore ouverte en forme de circlips, ou autre. La plaque de maintien 41 comporte au moins deux lèvres 42, qui sont agencées pour enserrer, dans une position de fermeture du rivet double, une première gorge extérieure 54 que comporte le corps intérieur 34, pour immobiliser axialement le corps intérieur 34 par rapport à la plaque de maintien 41. Cette première gorge extérieure 54 n'est pas de révolution, et est agencée de façon à ce qu'une rotation relative du corps intérieur 34 par rapport à la plaque de maintien 41 vers une position de dégagement écarte suffisamment, dans le plan de la plaque de maintien 41, les lèvres 42, pour autoriser une libération axiale du corps intérieur 34 par rapport à la plaque de maintien 41 dans la position de dégagement. Plus particulièrement, les lèvres 42 viennent alors en appui sur une portée 340 que comporte le corps intérieur 34. Ces lèvres 42 peuvent prendre notamment la forme de lames, ou autre.

Plus particulièrement, la fente traversante 53 du corps extérieur 33 n'est pas de révolution, et est agencée de façon à ce qu'une rotation relative du corps extérieur 33 par rapport à la plaque de maintien 41 vers une position d'ouverture écarte suffisamment les lèvres 42, dans le plan de la plaque de maintien 41, pour autoriser une libération axiale du corps extérieur 33 par rapport à la plaque de maintien 41 dans la position d'ouverture.

Plus particulièrement, le corps intérieur 34 comporte, dans un premier alésage 38 axial, un premier moyen d'entraînement, tel qu'encoche, bossage, empreinte de forme, pour sa manœuvre en rotation par un outil inséré dans le premier alésage 38, ce qui explique pourquoi on peut souhaiter le cacher, et alors le positionner sur le demi-brin inférieur. De la même façon, plus particulièrement, le corps extérieur 33 comporte, dans un deuxième alésage 39 axial, un deuxième moyen d'entraînement pour sa manoeuvre en rotation par un outil inséré dans le deuxième alésage 39. Dans une exécution plus simple, le corps intérieur 34 ou le corps extérieur 33 peut être manoeuvré par friction, ou avec une pince manipulée en extension, par un technicien d'après-vente.

Dans une réalisation particulière, le moyen de clipage 40 comporte au moins une plaque rigide 43, notamment deux plaques rigides 43 de part et d'autre de la plaque de maintien élastique 41. Cette plaque rigide 43 est agencée pour plaquer la plaque de maintien 41 dans une deuxième gorge extérieure 55 que comporte le corps extérieur 33 et dans laquelle débouche la fente traversante 53. Les figures illustrent deux telles plaques rigides 43, de part et d'autre de la plaque de maintien 41, ce qui procure l'avantage d'assurer une déformation de celle-ci uniquement dans le plan perpendiculaire à l'axe du rivet double. Dans la variante illustrée ces deux plaques rigides comportent des lumières oblongues décalées, qui, une fois combinées, positionnent parfaitement le rivet double dans le plan du brin. Ces deux plaques sont finalement fixées ensemble ainsi qu'à un des demi-brins du bracelet, pour achever la fixation du corps extérieur au bracelet. Dans une variante particulière non illustrée, une telle plaque rigide 43 peut être remplacée ou complétée par une plaque élastique formant un moyen de rappel dans la direction axiale du rivet double.

L'assemblage du bracelet selon cette première variante est très facile: le corps de rivet extérieur est maintenu dans un demi-brin de bracelet, par l'intermédiaire de la plaque de maintien et de chaque plaque rigide, l'autre demi-brin est rabattu par-dessus l'anse de la montre ou du bijou, au niveau du pli, sur le premier demi-brin. Le corps de rivet intérieur est inséré dans celui qui a déjà été monté, la plaque de maintien traverse le rivet extérieur et vient bloquer le corps intérieur pour le bloque axialement et l'empêcher de ressortir. Le démontage est aussi facile, en imprimant à l'aide d'un outil adapté une rotation d'un quart de tour au corps intérieur, de façon à écarter les lèvres de blocage de la plaque de maintien, pour le libérer.

Dans la deuxième variante, le corps inférieur 31 et le corps supérieur 32 sont agencés pour être chacun inséré dans un tube commun 30. De ce fait ils peuvent être identiques. Selon la variante d'exécution, ou bien le tube commun 30 est déformable élastiquement, ou bien le corps inférieur 31 et le corps supérieur 32 sont déformables élastiquement. Dans une autre variante encore on peut effectuer une réalisation en deux demi-tubes, notamment collés de manière élastique avec une colle silicone ou similaire, en jouant sur l'élasticité du bracelet.

Plus particulièrement, dans la version illustrée, le tube commun 30 est déformable élastiquement, et comporte au moins une fente 330 longitudinale sur tout ou partie de sa longueur, et qui est agencée pour permettre la libération du moyen de clipage lors d'une expansion imprimée au tube commun 30.

Plus particulièrement, le corps inférieur 31 et le corps supérieur 32 comportent chacun un alésage 39, respectivement 38, qui est agencé pour le passage d'un outil pour venir au contact d'un bourrelet intérieur 332 que comporte le tube commun 30, pour le déformer en expansion jusqu'à une position de libération du corps inférieur 31 et/ou du corps supérieur 32.

Plus particulièrement, le tube commun 30 comporte au moins une collerette médiane 331, qui est agencée pour être interposée entre le demi-brin inférieur 21 et le demi-brin supérieur 22. Cette collerette médiane 331 peut en particulier être utilisée comme surface de collage au demi-brin supérieur.

Dans une exécution particulière non illustrée, le tube commun 30 comporte une pluralité d'éléments assemblés de manière élastique.

L'assemblage du bracelet selon cette deuxième variante est également très aisé : le tube commun est inséré dans un des demi-brins, en appui sur sa collerette, les deux demi-brins sont rabattus l'un sur l'autre par-dessus l'anse de la montre ou du bijou, au niveau du pli. Les corps inférieur et supérieur sont tout simplement clipés dans le tube commun. Pour le démontage, le technicien introduit un outil dans l'alésage du rivet et prend appui sur le bourrelet pour procéder à l'expansion du tube commun, les deux corps sont alors déclipés et le bracelet est démonté. On note qu'il est possible de libérer à volonté l'un ou l'autre de ces corps, si on ne désire pas les déposer simultanément.

L'invention concerne encore une montre 100 comportant un tel bracelet 10.

L'invention concerne encore un bijou 200 comportant un tel bracelet 10.

En somme, l'invention procure une fonctionnalité d'interchangeabilité, avec un assemblage réversible des rivets par un technicien horloger. La sécurité du port de la montre ou du bijou est assurée. L'invention permet aussi une personnalisation des bracelets en rendant facile un assortiment de matériaux et textures de brins de bracelet d'une part, et de corps de rivets d'autre part, qui permettent d'offrir à la clientèle une grande variété d'aspects, à la demande.

## Revendications

1. Bracelet de montre ou de bijou (10) comportant au moins un brin (20) lequel comporte un demi-brin inférieur (21) connexe au niveau d'un pli (23) à un demi-brin supérieur (22) agencés pour entourer une barrette ou une anse de montre ou de bijou au niveau dudit pli (23) et comportant chacun, en symétrie par rapport audit pli (23), au moins un perçage (24) agencé pour le passage d'un rivet double, que comporte ledit bracelet (10), et qui comporte un corps inférieur à tête (31) et un corps supérieur à tête (32) agencés pour être, ou bien insérés l'un dans l'autre coaxialement, ou bien chacun inséré dans un tube commun (30) déformable et coaxialement audit tube commun (30), avec leurs têtes respectives de part et d'autre dudit brin (20) replié sur lui-même, **caractérisé en ce que** ledit bracelet (10) comporte, au niveau de chaque dit rivet double, un moyen de clipage (40) pour assurer un arrêt axial réversible dudit corps inférieur (31) par rapport audit corps supérieur (32), ledit moyen de clipage (40) comportant, ou bien au moins une plaque de maintien (41) élastique agencée pour mettre en alignement une gorge inférieure (55) dudit corps inférieur (31) et une gorge supérieure (54) dudit corps supérieur (32) quand ledit corps inférieur (31) et ledit corps supérieur (32) sont agencés pour être insérés l'un dans l'autre, ou bien au moins deux lèvres de clipage inférieure (61) et supérieure (62) ménagées dans ledit tube commun (30) et chacune agencée pour coopérer par clipage respectivement avec une lèvre complémentaire de clipage inférieure (71) dudit corps inférieur (31) et avec une lèvre complémentaire de clipage supérieure (72) dudit corps supérieur (32) quand ledit corps inférieur (31) et ledit corps supérieur (32) sont agencés pour être chacun inséré dans ledit tube commun (30).

2. Bracelet (10) selon la revendication 1, **caractérisé en ce que** ledit corps inférieur (31) et ledit corps supérieur à (32) sont agencés pour être insérés l'un dans l'autre, et **en ce que** ledit moyen de clipage (40) comporte au moins une plaque de maintien (41) élastique agencée pour mettre en alignement une gorge inférieure (55) dudit corps inférieur (31) et une gorge supérieure (54) dudit corps supérieur (32) quand ledit corps inférieur (31) et ledit corps supérieur (32) sont insérés l'un dans l'autre.

3. Bracelet (10) selon la revendication 2, **caractérisé en ce qu'**un corps extérieur (33), qui est celui desdits corps inférieur (31) et corps supérieur (32) qui enserre l'autre lequel est un corps intérieur (34), comporte une fente traversante (53) perpendiculaire à son axe et agencée pour servir de logement à ladite plaque de maintien (41) élastique, laquelle comporte au moins deux lèvres (42) agencées pour enserrer, dans une position de fermeture dudit rivet double, une première gorge extérieure (54) que comporte ledit corps intérieur (34), pour immobiliser axialement ledit corps intérieur (34) par rapport à ladite plaque de maintien (41), et **en ce que** ladite première gorge extérieure (54) n'est pas de révolution et est agencée de façon à ce qu'une rotation relative dudit corps intérieur (34) par rapport à ladite plaque de maintien (41) vers une position de dégagement écarte suffisamment, dans le plan de ladite plaque de maintien (41), lesdites lèvres (42), en appui sur une portée (340) que comporte ledit corps intérieur (34), pour autoriser une libération axiale dudit corps intérieur (34) par rapport à ladite plaque de maintien (41) dans ladite position de dégagement.

4. Bracelet (10) selon la revendication 3, **caractérisé en ce que** ledit corps intérieur (34) comporte, dans un premier alésage (38) axial, un premier moyen d'entraînement pour sa manœuvre en rotation par un outil inséré dans ledit premier alésage (38).

5. Bracelet (10) selon la revendication 3 ou 4, **caractérisé en ce que** ladite fente traversante (53) dudit corps extérieur (33) n'est pas de révolution et est agencée de façon à ce qu'une rotation relative dudit corps extérieur (33) par rapport à ladite plaque de maintien (41) vers une position d'ouverture écarte suffisamment lesdites lèvres (42), dans le plan de ladite plaque de maintien (41), pour autoriser une libération axiale dudit corps extérieur(33) par rapport à ladite plaque de maintien (41) dans ladite position d'ouverture.

6. Bracelet (10) selon l'une des revendications 3 à 5, **caractérisé en ce que** ledit corps extérieur (33) comporte, dans un deuxième alésage (39) axial, un deuxième moyen d'entraînement pour sa manœuvre en rotation par un outil inséré dans ledit deuxième alésage (39).

7. Bracelet (10) selon l'une des revendications 3 à 6, **caractérisé en ce que** ledit moyen de clipage (40) comporte au moins une plaque élastique supplémentaire (43) formant un moyen de rappel dans la direction axiale dudit rivet double et agencée pour plaquer ladite plaque de maintien (41) dans une deuxième gorge extérieure (55) que comporte ledit corps extérieur (33) et dans laquelle débouche ladite fente traversante (53).

8. Bracelet (10) selon la revendication 1, **caractérisé en ce que** ledit corps inférieur (31) et ledit corps supérieur (32) sont agencés pour être chacun inséré dans un tube commun (30), et **en ce que** ledit moyen de clipage (40) comporte au moins deux lèvres de clipage inférieure (61) et supérieure (62) ménagées dans ledit tube commun (30) et chacune agencée pour coopérer par clipage dans une position de fermeture respectivement avec une lèvre complémentaire de clipage inférieure (71) dudit corps inférieur (31) et avec une lèvre complémentaire de clipage supérieure (72) dudit corps supérieur (32) quand ledit corps inférieur (31) et ledit corps supérieur (32) sont chacun inséré dans ledit tube commun (30), et **en ce que**, ou bien ledit tube commun (30) est déformable élastiquement, ou bien ledit corps inférieur (31) et ledit corps supérieur (32) sont déformables élastiquement.

9. Bracelet (10) selon la revendication 8, **caractérisé en ce que** ledit tube commun (30) est déformable élastiquement et comporte au moins une fente (330) longitudinale sur tout ou partie de sa longueur agencée pour permettre la libération dudit moyen de clipage lors d'une expansion imprimée audit tube commun (30).

10. Bracelet (10) selon la revendication 9, **caractérisé en ce que** ledit corps inférieur (31) et ledit corps supérieur (32) comportent chacun un alésage (39 ; 38) agencé pour le passage d'un outil pour venir au contact d'un bourrelet intérieur (332) que comporte ledit tube commun (30), pour le déformer en expansion jusqu'à une position de libération dudit corps inférieur (31) et/ou corps supérieur (32).

11. Bracelet (10) selon l'une des revendications 8 à 10, **caractérisé en ce que** ledit tube commun (30) comporte au moins une collerette médiane (331) agencée pour être interposée entre ledit demi-brin inférieur (21) et ledit demi-brin supérieur (22).

12. Bracelet (10) selon l'une des revendications 8 à 11, **caractérisé en ce que** ledit tube commun (30) comporte une pluralité d'éléments assemblés de manière élastique.

13. Montre (100) comportant un bracelet (10) selon l'une des revendications 1 à 12.

14. Bijou (200) comportant un bracelet (10) selon l'une des revendications 1 à 12.

## Patentansprüche

1. Uhren- oder Schmuckarmband (10) mit mindestens einem Strang (20), der einen unteren Halbstrang (21) aufweist, der an einer Falz (23) mit einem oberen Halbstrang (22) zugekehrt ist, die so angeordnet sind, dass sie einen Steg oder einen Bügel einer Armbanduhr oder eines Schmuckstücks an der Falz (23) umschließen, und jeweils symmetrisch zu der Falz (23) mindestens eine Durchlochung (24) aufweisen, die für den Durchgang einer Doppelniete ausgelegt ist, die das Armband (10) aufweist, und die einen unteren Körper mit Kopf (31) und einen oberen Körper mit Kopf (32) aufweist, die dazu vorgesehen sind, entweder koaxial ineinander oder jeweils in ein verformbares gemeinsames Rohr (30) koaxial zu dem gemeinsamen Rohr (30) eingeführt zu werden, wobei ihre jeweiligen Köpfe auf beiden Seiten des Strangs (20) auf sich selbst gefaltet sind, **dadurch gekennzeichnet, dass** das Armband (10) auf Höhe jeder Doppelniete ein Einrastmittel (40) umfasst, um einen reversiblen axialen Verschluss des unteren Körpers (31) in Bezug auf den oberen Körper (32) sicherzustellen, wobei das Einrastmittel (40) entweder mindestens eine elastische Halteplatte (41) zum Ausrichten einer unteren Nut (55) des unteren Körpers (31) auf eine obere Nut (54) des oberen Körpers (32), wenn der untere Körper (31) und der obere Körper (32) so angeordnet sind, dass sie ineinandersetzbar sind, oder mindestens zwei Einrastlippen umfasst, eine untere (61) und eine obere (62), die in dem gemeinsamen Rohr (30) ausgebildet sind und jeweils dazu vorgesehen sind, durch Einrasten mit einer komplementären unteren Einrastlippe (71) des unteren Körpers (31) bzw. mit einer komplementären oberen Einrastlippe (72) des oberen Körpers (32) zusammenzuwirken, wenn der untere Körper (31) und der obere Körper (32) so angeordnet sind, dass sie jeweils in das gemeinsame Rohr (30) eingesetzt werden.

2. Armband (10) nach Anspruch 1, **dadurch gekennzeichnet, dass** der untere Körper (31) und der obere Körper (32) so angeordnet sind, dass sie ineinandersetzbar sind, und dass das Einrastmittel (40) mindestens eine elastische Halteplatte (41) umfasst, die dazu vorgesehen ist, eine untere Nut (55) des unteren Körpers (31) und eine obere Nut (54) des oberen Körpers (32) aufeinander auszurichten, wenn der untere Körper (31) und der obere Körper (32) ineinandergesetzt werden.

3. Armband (10) nach Anspruch 2, **dadurch gekennzeichnet, dass** ein äußerer Körper (33), der jener des unteren Körpers (31) und des oberen Körpers (32) ist, der den anderen, der der innere Körper (34) ist, umschließt, einen Durchgangsschlitz (53) senkrecht zu seiner Achse aufweist, der dazu vorgesehen ist, als Aufnahme für die elastische Halteplatte (41) zu dienen, die mindestens zwei Lippen (42) aufweist, die so angeordnet sind, dass sie in einer Verschlussposition der Doppelniete eine erste äußere Nut (54), die der innere Körper (34) aufweist, einschließen, um den inneren Körper (34) in Bezug auf die Halteplatte (41) axial zu fixieren, und dass die erste äußere Nut (54) nicht rotationssymmetrisch ist und so angeordnet ist, dass eine relative Drehung des inneren Körpers (34) in Bezug auf die Halteplatte (41) in eine Eingrifflöseposition in der Ebene der Halteplatte (41) die Lippen (42), die sich auf einem Bereich (340) abstützen, den der innere Körper (34) aufweist, ausreichend beabstandet, um eine axiale Freigabe des inneren Körpers (34) in Bezug auf die Halteplatte (41) in der Eingrifflöseposition zuzulassen.

4. Armband (10) nach Anspruch 3, **dadurch gekennzeichnet, dass** der innere Körper (34) in einer ersten axialen Bohrung (38) ein erstes Antriebsmittel für seine Drehbewegung durch ein in die erste Bohrung (38) eingeführtes Werkzeug umfasst.

5. Armband (10) nach Anspruch 3 oder 4, **dadurch gekennzeichnet, dass** der Durchgangsschlitz (53) des äußeren Körpers (33) nicht rotationssymmetrisch ist und so angeordnet ist, dass eine relative Drehung des äußeren Körpers (33) in Bezug auf die Halteplatte (41) in eine Öffnungsposition die Lippen (42) in der Ebene der Halteplatte (41) ausreichend beabstandet, um eine axiale Freigabe des äußeren Körpers (33) in Bezug auf die Halteplatte (41) in der Öffnungsposition zuzulassen.

6. Armband (10) nach einem der Ansprüche 3 bis 5, **dadurch gekennzeichnet, dass** der äußere Körper (33) in einer zweiten axialen Bohrung (39) ein zweites Antriebsmittel für seine Drehbewegung durch ein in die zweite Bohrung (39) eingeführtes Werkzeug umfasst.

7. Armband (10) nach einem der Ansprüche 3 bis 6, **dadurch gekennzeichnet, dass** das Einrastmittel (40) mindestens eine zusätzliche elastische Platte (43) umfasst, die ein Rückstellmittel in axialer Richtung der Doppelniete bildet und dazu vorgesehen ist, die Halteplatte (41) in eine zweite äußere Nut (55) zu drücken, die der äußere Körper (33) aufweist und in die der Durchgangsschlitz (53) mündet.

8. Armband (10) nach Anspruch 1, **dadurch gekennzeichnet, dass** der untere Körper (31) und der obere Körper (32) so angeordnet sind, dass sie jeweils in ein gemeinsames Rohr (30) einsetzbar sind, und dass das Einrastmittel (40) mindestens zwei untere (61) und obere (62) Einrastlippen umfasst, die in dem gemeinsamen Rohr (30) ausgebildet sind und jeweils dazu vorgesehen sind, durch Einrasten in einer Verschlussposition mit einer komplementären unteren Einrastlippe (71) des unteren Körpers (31) bzw. mit einer komplementären oberen Einrastlippe (72) des oberen Körpers (32) zusammenzuwirken, wenn der untere Körper (31) und der obere Körper (32) jeweils in das gemeinsame Rohr (30) eingesetzt sind, und dass entweder das gemeinsame Rohr (30) elastisch verformbar ist oder der untere Körper (31) und der obere Körper (32) elastisch verformbar sind.

9. Armband (10) nach Anspruch 8, **dadurch gekennzeichnet, dass** das gemeinsame Rohr (30) elastisch verformbar ist und auf seiner gesamten Länge oder auf einem Teil hiervon mindestens einen longitudinalen Schlitz (330) aufweist, der dazu vorgesehen ist, die Freigabe des Einrastmittels bei einer auf das gemeinsame Rohr (30) ausgeübten Ausdehnung zu ermöglichen.

10. Armband (10) nach Anspruch 9, **dadurch gekennzeichnet, dass** der untere Körper (31) und der obere Körper (32) jeweils eine Bohrung (39; 38) für den Durchgang eines Werkzeugs aufweisen, um mit einem inneren Wulst (332) in Kontakt zu gelangen, den das gemeinsame Rohr (30) aufweist, um es ausdehnend bis in eine Freigabeposition des unteren Körpers (31) und/oder des oberen Körpers (32) zu verformen.

11. Armband (10) nach einem der Ansprüche 8 bis 10, **dadurch gekennzeichnet, dass** das gemeinsame Rohr (30) mindestens einen Mittelkragen (331) aufweist, der zum Einfügen zwischen den unteren Halbstrang (21) und den oberen Halbstrang (22) vorgesehen ist.

12. Armband (10) nach einem der Ansprüche 8 bis 11, **dadurch gekennzeichnet, dass** das gemeinsame Rohr (30) mehrere elastisch zusammengebaute Elemente umfasst.

13. Armbanduhr (100), umfassend ein Armband (10) nach einem der Ansprüche 1 bis 12.

14. Schmuckstück (200), umfassend ein Armband (10) nach einem der Ansprüche 1 bis 12.

## Claims

1. Watch or jewellery bracelet (10) comprising at least one bracelet member (20) which comprises a lower half bracelet portion (21) connected adjacent at a fold portion (23) to an upper half bracelet portion (22) both arranged to together surround a watch or jewellery bar or lug at said fold portion (23) and each including, in symmetry with respect to said fold portion (23), at least one drilled hole (24) arranged for the passage of a double rivet, comprised in saidbracelet (10), and which has a lower body with a head (31) and an upper body with a head (32) arranged either to be inserted one inside the other coaxially,or each inserted into a common deformable tube (30) and coaxially to said common tube (30), with their respective heads on either side of said bracelet member (20) folded onto itself, **characterized in that** said bracelet (10) comprises, at each said double rivet, a snap means (40) for ensuring a reversible axial stop for said lower body (31) with respect to said upper body (32), said snap means (40) comprising, either at least one elastic holding plate (41) arranged to place in alignment a lower groove (55) of said lower body (31) and an upper groove (54) of said upper body (32) when said lower body (31) and said upper body (32) are arranged to be inserted one inside the other, or at least two lower (61) and upper (62) clip lips arranged inside said common tube (30), and each arranged to snap fit respectively with a complementary lower clip lip (71) of said lower body (31) and with a complementary upper clip lip (72) of said upper body (32), when said lower body (31) and said upper body (32) are each arranged to be inserted into said common tube (30).

2. Bracelet (10) according to claim 1, **characterized in that** said lower body (31) and said upper body (32) are arranged to be inserted one inside the other, and **in that** said snap means (40) comprises at least one elastic holding plate (41) arranged to place in alignment a lower groove (55) of said lower body (31) and an upper groove (54) of said upper body (32) when said lower body (31) and said upper body (32) are inserted one inside the other.

3. Bracelet (10) according to claim 2, **characterized in that** an outer body (33), which is whichever of said lower body (31) and upper body (32) surrounds the other, which is an inner body (34), comprises a through slot (53) perpendicular to its axis and arranged to serve as a housing for said elastic holding plate (41), which comprises at least two lips (42) arranged to surround, in a closed position of said double rivet, a first outer groove (54) comprised in said inner body (34), to axially immobilise said inner body (34) with respect to said holding plate (41), and **in that** said first outer groove (54) is not of rotational shape, and is arranged such that a relative rotation of said inner body (34) with respect to said holding plate (41) towards a release position moves sufficiently far apart said lips (42), resting on a shoulder (340) comprised in said inner body (34) in the plane of said holding plate (41), to allow the axial release of said inner body (34) with respect to said holding plate (41) in said release position.

4. Bracelet (10) according to claim 3, **characterized in that** said inner body (34) comprises, in a first axial bore (38), a first driving means for rotational manipulation thereof by a tool inserted into said first bore (38).

5. Bracelet (10) according to claim 3 or 4, **characterized in that** said through slot (53) of said outer body (33) is not of rotational shape, and is arranged such that a relative rotation of said outer body (33) with respect to said holding plate (41) towards an open position moves said lips (42) sufficiently far apart, in the plane of said holding plate (41), to allow the axial release of said outer body (33) with respect to said holding plate (41) in said open position.

6. Bracelet (10) according to one of claims 3 to 5, **characterized in that** said outer body (33) comprises, in a second axial bore (39), a second driving means to allow rotational manipulation thereof by a tool inserted into said second bore (39).

7. Bracelet (10) according to one of claims 3 to 6, **characterized in that** said snap means (40) comprises at least one additional elastic plate (43) forming a means of return in the axial direction of said double rivet and arranged to press said holding plate (41) into a second outer groove (55) comprised in said outer body (33) and into which said through slot (53) opens.

8. Bracelet (10) according to claim 1, **characterized in that** said lower body (31) and said upper body (32) are each arranged to be inserted into a common tube (30), and **in that** said snap means (40) comprises at least two lower (61) and upper (62) clip lips arranged in said common tube (30) and each arranged to cooperate in a clip fit in a closed position respectively with a complementary lower clip lip (71) of said lower body (31) and with a complementary upper clip lip (72) of said upper body (32) when said lower body (31) and said upper body (32) are each inserted into said common tube (30), and **in that** either said common tube (30) is elastically deformable, or said lower body (31) and said upper body (32) are elastically deformable.

9. Bracelet (10) according to claim 8, **characterized in that** said common tube (30) is elastically deformable and comprises at least one longitudinal slot (330) over all or part of its length to allow the release of said snap means when expansion is imparted to said common tube (30).

10. Bracelet (10) according to claim 9, **characterized in that** said lower body (31) and said upper body (32) each comprise a bore (39; 38) arranged for the passage of a tool to come into contact with an inner bulge portion (332) comprised in said common tube (30), to deform and expand said tube into a position releasing said lower body (31) and/or upper body (32).

11. Bracelet (10) according to one of claims 8 to 10, **characterized in that** said common tube (30) comprises at least one median collar (331) arranged to be inserted between said lower half bracelet portion (21) and said upper half bracelet portion (22).

12. Bracelet (10) according to one of claims 8 to 11, **characterized in that** said common tube (30) comprises a plurality of elastically assembled elements.

13. Watch (100) including a bracelet (10) according to one of claims 1 to 12.

14. Piece of jewellery (200) including a bracelet (10) according to one of claims 1 to 12.
